# FASCICULE DE BREVET EUROPEEN

(11) **EP 2 940 692 B1**
(45) Date de publication et mention de la délivrance du brevet: **04.04.2018**
(21) Numéro de dépôt: 15165437.3
(22) Date de dépôt: 28.04.2015
(51) Int. Cl.: G21C 13/10, G21C 13/028

(54) **STRUCTURE MODULAIRE DE RENFORCEMENT DE L'ETANCHEITE A L'AIR D'ENCEINTE DE CONFINEMENT, MODULES CONSTITUTIFS DE CETTE STRUCTURE, LEUR PROCEDE DE MISE EN PLACE ET DE DEMONTAGE**
MODULSTRUKTUR ZUR VERSTÄRKUNG DER LUFTDICHTHEIT EINES SICHERHEITSBEHÄLTERS, MODULE, DIE BESTANDTEIL DIESER STRUKTUR SIND, IHR MONTAGE- UND DEMONTAGEVERFAHREN
MODULAR STRUCTURE FOR REINFORCING THE AIRTIGHTNESS OF A CONTAINMENT, MODULES THAT FORM SAID STRUCTURE, METHOD FOR PLACING AND REMOVING THE SAME

(30) Priorité: 30.04.2014 FR 1453978
(43) Date de publication de la demande: 04.11.2015
(73) Titulaire: EIFFAGIE GENIE CIVIL, 78140 Velizy Villacoublay (FR)
(72) Inventeur: Dolo, Jean-Marie, 94240 L'HAY LES ROSES (FR); Desfour, Sébastien, 94270 Le Kermlin Bicêtre (FR)
(74) Mandataire: Cabinet Plasseraud

(56) Documents cités:
- FR-A1- 2 438 896
- FR-A1- 2 576 344

## Description

La présente invention porte sur une structure modulaire de renforcement de l'étanchéité à l'air d'enceinte de confinement, notamment pour le chemisage externe des enceintes internes des centrales nucléaires, sur les modules constitutifs et sur leur procédé de mise en place et de démontage.

Dans le cadre du prolongement de la durée de vie des centrales nucléaires de 40 ans à 60 ans, il est nécessaire de renforcer l'étanchéité à l'air des enceintes de confinement à double paroi des réacteurs nucléaires des générations P4, P4' et N4.

Dans le cadre légal actuel, l'étanchéité à l'air de ces enceintes est vérifiée périodiquement en leur faisant subir un test de gonflement représentatif des cas accidentels de dimensionnement. Le résultat des tests les plus récemment réalisés laisse apparaitre qu'un certain nombre de ces enceintes approche la limite autorisée.

En tenant compte du vieillissement du béton, et des pertes de précontrainte par fluage, les limites autorisées par la loi ont une forte probabilité d'être dépassées dans quelques années. Il est donc important de prévenir de tels dépassements et d'accroître les marges de sécurité en renforçant l'étanchéité à l'air de ces enceintes.

L'enceinte contribue au confinement des matières radioactives présentes dans le circuit primaire.

Elle est la dernière barrière de confinement d'un ensemble de trois barrières qui sont constituées par :
- La gaine du combustible
- Le circuit primaire
- L'enceinte de confinement.

La troisième barrière de confinement est composée de trois éléments indépendants :
- l'enceinte interne qui maintient le confinement des matières radioactives dans le volume du bâtiment réacteur ;
- l'espace intermédiaire qui joue un rôle de confinement dynamique (volume en dépression vis à vis de l'extérieur, contrôle de la radioactivité et traitement de l'air avant rejet) en cas de perte d'étanchéité de l'enceinte interne ;
- l'enceinte externe du bâtiment participe au confinement par la création de cet espace intermédiaire, et assure la résistance aux agressions extérieures potentielles.

Pour prévenir des défauts d'étanchéité à l'air de l'enceinte interne, il est donc envisagé de renforcer la paroi externe de l'enceinte interne. Le renforcement de cette paroi doit pouvoir être réalisé de façon totale mais également partielle si seules des zones de l'enceinte sont fragilisées. Il serait également avantageux que ce renforcement puisse être réversible pour pouvoir être lui-même remplacé dans quelques années ou dizaines d'années par des systèmes différents ou plus performants sans que l'enceinte interne ne soit endommagée.

Les présents inventeurs ont trouvé qu'il était possible d'améliorer la perméabilité à l'air d'un support, notamment d'une enceinte de confinement de centrale nucléaire, en mettant en place sur le support dont l'étanchéité à l'air doit être améliorée, une structure modulaire de renforcement comprenant un réseau continu de modules constitués chacun d'un cadre métallique insérant une plaque en béton fibré ultra-haute performance BFUHP, ledit cadre métallique étant fixé de manière étanche sur le support.

La structure selon l'invention étant modulaire, elle est facilement adaptable à un recouvrement partiel du support devant être recouvert. Ainsi, il sera possible de placer les modules sur toute la surface du support ou bien uniquement sur les surfaces de support où des défaillances d'étanchéité sont apparues ou sont susceptibles d'apparaître.

Dans la structure selon l'invention, le cadre métallique d'un module est de forme générale polyédrique, de préférence rectangulaire ou hexagonale. Toutes les dimensions sont envisageables. Par exemple, le cadre métallique peut être un rectangle de 1m*3m.

Lorsque les cadres métalliques sont hexagonaux, ils sont avantageusement disposés en un réseau en forme de nid d'abeille.

Lorsque les cadres métalliques sont rectangulaires, ils sont avantageusement disposés en quinconce.

Dans la structure selon l'invention, le cadre métallique peut présenter différents profils adaptés de façon à solidariser ledit cadre métallique à un cadre métallique adjacent.

Selon un mode de réalisation, le profil du cadre métallique est un profil oméga.

Le profil oméga sera plus précisément décrit ci-dessous en lien avec le module.

Selon un autre mode de réalisation particulier, le profil du cadre métallique est un profil en crochet à angle droit vers le bas qui sera également plus précisément décrit ci-dessous en lien avec le module.

Le cadre métallique peut être réalisé en acier aux caractéristiques mécaniques courantes ou bien en acier inoxydable.

L'invention porte également sur les modules de renforcement de l'étanchéité à l'air d'un support. Chaque module comprend un cadre métallique insérant de façon étanche une plaque de béton fibré à ultra-haute performance BFUHP.

Le module selon l'invention présente une forme générale polyédrique, de préférence rectangulaire ou hexagonale.

Dans la structure, ou le module, selon l'invention, une plaque de béton fibré à ultra haute performance (BFUHP) est enserrée de façon étanche dans le cadre métallique.

La plaque de béton BFUHP présente une épaisseur adaptée selon l'étanchéité à l'air requise. De façon générale, cette épaisseur est de 10 à 15 cm environ.

Ce béton fibré a des caractéristiques mécaniques et intrinsèques proches de celui qui serait nécessaire dans le cadre des revêtements d'enceinte (en termes de compacité, de retrait et de tenue mécanique).

Les caractéristiques vis-à-vis de la perméabilité à l'air de ce revêtement doivent être équivalentes au support non détérioré (dans son ensemble) qu'il est destiné à renforcer.

Ainsi, la plaque en béton fibré est réputée étanche (avec une perméabilité, à l'air, équivalente à la paroi de l'enceinte interne saine).

Le BFUHP est un matériau à matrice cimentaire, renforcé par des fibres. Sa formulation fait appel à des adjuvants (par exemple superplastifiants, réducteurs d'eau), des compositions granulaires spécifiques (par exemple 4 à 5 échelles de grains), un fort dosage en ciment des fibres et une teneur en eau très faible (rapport eau/ciment <0,25, voire <0,20).

Le BFUHP présente les caractéristiques suivantes :
- Module de traction à 28 jours : de 6 à 10 MPa
- Module de flexion : de 18 à 35 MPa
- Retrait à 28 jours : inférieur à 350 µm/m à 50% HR
- Perméabilité à l'air : au moins de 2. 10⁻¹⁸ m² (selon norme XP P 18-463) à 90 jours.
Le renfort constitué par le béton fibré a une capacité de transfert à l'air d'au maximum 15 Nlitres/m²/h (normaux litres : volume de gaz équivalent ramené à la pression atmosphérique).

Ces performances sont obtenues sans traitement thermique.

Selon un mode de réalisation, dans la structure ou le module de l'invention, le profil du cadre métallique est un profil oméga. Les profils oméga sont fixés par leurs parties plates à l'enceinte à l'aide de chevilles, de préférence à verrouillage de forme. Sous l'oméga (c'est-à-dire entre le cadre métallique et le support) sont mis en place des joints (un joint plat sous les parties plates et un joint torique dans la chambre de déformation). Ce complexe de joints permet de garantir l'étanchéité à l'air du module et de la structure. La chambre de déformation du profil oméga est dotée d'une partie supérieure élastique, démontable ou fixe. Elle est réalisée par exemple par une forme en accordéon.

Les déformations résiduelles de la plaque en béton fibré ainsi que celles du support (enceinte béton) sont reprises par déformations du profil Oméga.

Le profil Oméga est surmonté de part et d'autre de la chambre de déformation de 2 protubérances, par exemple en forme de T. Celles-ci permettent de solidariser et d'ancrer (de manières étanche), la plaque de béton fibré au cadre métallique constitué de profil oméga.

Selon un autre mode de réalisation particulier, dans la structure ou le module de l'invention, le profil du cadre métallique est un profil en crochet à angle droit vers le bas.

Les profils en crochet à angle droit vers le bas comprennent notamment une partie plate et une extrémité sous la forme de crochet (s) à angle droit vers le bas. Ces profils sont fixés par leurs parties plates à l'enceinte à l'aide de chevilles, de préférence à verrouillage de forme. Sous le profil en crochet à angle en droit sont mis en place des joints (un joint plat sous les parties plates et un joint en forme de U sous les crochets à angle droit). Plus particulièrement, les parties libres du profil en crochet à angle droit de 2 cadres adjacents s'insèrent dans la partie centrale du joint en U. Ce complexe de joints permet de garantir l'étanchéité à l'air du module et de la structure.

Dans le cas du profil oméga ou du profil en crochet à angle droit, le joint plat situé sous les parties plates des profils peut être un joint multicouche.

Ainsi, selon un mode de réalisation, le joint plat est un joint multicouche composé d'une alternance de couches rigides et de couches souples. Une couche est dite rigide si sa Dureté Shore A est supérieure à 70. Si sa Dureté Shore A est inférieure à 70, alors, la couche est dite souple.

Notamment, chaque couche peut être constituée de caoutchouc éventuellement cellulaire de rigidité différente. Par exemple les couches rigides peuvent être en caoutchouc cellulaire de type éthylène-propylène-diène et les couches souples peuvent être en caoutchouc cellulaire de type EPK (qui est également de type éthylène-propylène-diène mais est non sulfuré).

Il a été ainsi démontré que la superposition des couches suivantes déposées sur un support permettait d'obtenir des résultats optimaux en termes d'étanchéité à l'air du module et de la structure: couche de 0,5 à 1,5mm, de préférence 1mm constituée d'un joint EPDM/ couche de 8 à 12mm, de préférence 10mm d'une mousse EPK/ couche de 3 à 8mm, de préférence 5mm constituée d'un joint EPDM/ couche de 3 à 8mm, de préférence 5mm d'une mousse EPK/couche de 0,5 à 1,5mm, de préférence 1mm constituée d'un joint EPDM.

Le joint plat peut être directement accolé au cadre métallique au bien fixé à ce dernier via une couche adhésive, comme par exemple une couche comprenant du propylene silicone et une émulsion acrylique.

Lorsque le joint plat est un joint multicouche, une couche adhésive peut être présente entre les différentes couches constitutives.

Selon un autre mode de réalisation, une couche d'apprêt est appliquée entre le support et le joint plat afin de boucher les pores du support. Cette couche d'apprêt peut être de la paraffine.

Dans le cas d'un profil en crochet à angle droit, un joint en forme de U est disposé sous les crochets à angle droit, chacun des crochets de deux cadres adjacents s'insérant dans la partie centrale du joint en U.

Ce joint en forme de U peut également présenter plusieurs couches de matériaux différents ayant des épaisseurs différentes.

Selon un mode de réalisation, le joint en U est un joint multicouche. Ce joint en U multicouche est constitué d'une succession de couches en caoutchouc cellulaire rigide et en caoutchouc cellulaire souple, la couche en caoutchouc cellulaire rigide étant de référence en contact avec le support. A titre d'exemple, le joint multicouche en U peut être constituer d'une première couche rigide destinée à venir en contact avec le support de 0,5 à 1,5mm, de préférence de 1mm, par exemple en EPDM, sur laquelle est disposée une couche souple de 10 à 20mm, de préférence de 15mm, par exemple en EPK, et sur laquelle est placée une couche rigide de 25 à 35mm, de préférence de 30mm, par exemple en EPDM.

Le joint multicouche en U peut être obtenu par extrusion.

Selon un mode de réalisation, le joint sous forme de U présente une hauteur supérieure à celle du joint plat situé sous les parties plates du cadre métallique.

L'invention porte également sur un procédé de mise en place d'un module, tel que défini précédemment, sur un support. Ledit procédé comprend :
- la fixation sur ledit support du cadre métallique, notamment par chevillage ;
- le coulage de la plaque de BFUHP dans le cadre métallique.

L'étape de fixation comprend :
- la mise en place entre le cadre métallique et le support d'un joint d'étanchéité ;
- la mise en place de chevilles de fixation traversant le profil Oméga ou le profil en crochet à angle droit vers le bas, le joint d'étanchéité et une partie du support ;
- la mise en place dans le support de goujons de fixation dans la partie centrale délimitée par le cadre métallique.

Les chevilles de fixation sont des chevilles à verrouillage de forme, telles que celles décrites dans la demande de brevet EP 0 811 775.

Les goujons sont mis en place grâce à une résine de scellage étanche à l'air, telle que celle décrite dans la demande de brevet EP 1118628. On peut par exemple utiliser une résine époxy de type RE500 de chez HILTI®.

Le système complet s'ancre dans les 12 premiers cm du voile d'enceinte. De ce fait, il n'atteint pas la zone des câbles de précontrainte (zone suspectée de faire des réseaux de fuites).

L'étape de coulage comprend la mise en place d'un coffrage, le remplissage du coffrage par le BFUHP frais, le séchage et le décoffrage. La prise du béton fibré, ainsi que sa résistance optimale est obtenue à température ambiante.

La tenue mécanique de la plaque en béton fibré au support (voile béton de l'enceinte) est obtenue d'une part par les chevilles de fixation de l'Omega (cadre métallique) et d'autre part par des goujons scellés à la résine dans le voile support.

L'invention porte également sur le procédé de mise en place d'une structure modulaire telle que définie précédemment, comprenant la fixation des différents cadres métalliques des modules pour former un réseau continu et le coulage des plaques de béton fibré dans chacun des cadres métalliques. Les étapes de fixation et de coulage sont réalisées comme décrit précédemment.

La structure étant démontable, l'invention porte également sur un procédé de démontage de la structure modulaire. Ce procédé de démontage peut être appliqué à toute la structure ou seulement à certains modules. Il consiste à détruire la plaque de béton fibré et à retirer les chevilles et goujons puis à sceller les trous laissés par les chevilles et goujons avec une résine de scellage étanche à l'air. La résine de scellage peut être la même que celle décrite précédemment pour sceller les goujons.

La structure et/ou le module est applicable sur les différentes parties de l'enceinte :
- sur le cylindre ;
- au droit des traversées avec la mise en oeuvre de pièce de cadre adapté ou de prolongation de tubes de réservation ;
- au droit des sas (matériel et personnel).

L'invention sera décrite de façon plus détaillée en lien avec les dessins sur lesquels :
- la figure 1 représente une coupe transversale d'un module de renforcement de l'étanchéité à l'air fixé sur un support selon un mode de réalisation;
- la figure 2 représente un agrandissement du profil oméga (partie II) de la figure 1 ;
- la figure 3 représente une coupe transversale des moyens de fixation mis en place sur un support ;
- la figure 4 représente une coupe transversale d'un module de renforcement de l'étanchéité à l'air fixé sur un support avec les efforts dus au retrait après coulage du béton ;
- la figure 5 représente une coupe transversale d'un module de renforcement de l'étanchéité à l'air fixé sur un support selon un autre mode de réalisation;
- la figure 6 représente un agrandissement du profil en crochet à angle droit (partie en pointillés) de la figure 5 ;
- la figure 7 représente un profil en crochet à angle droit vers le bas comprenant un ensemble de joints multicouches;
- la figure 8 représente schématiquement une structure modulaire montée en quinconce ;
- la figure 9 représente schématiquement une structure modulaire en nid d'abeille ;
- les figures 10a-10d sont des représentations en coupe transversale d'un module de renforcement de l'étanchéité à l'air fixé sur un support lors des différentes étapes d'un test de mise sous pression de 4,5 bars, selon l'exemple 2 ;
- les figures 11a-11d sont des représentations en coupe transversale d'un module de renforcement de l'étanchéité à l'air fixé sur un support lors des différentes étapes d'un test de mise sous pression de 6,5 bars, selon l'exemple 3.

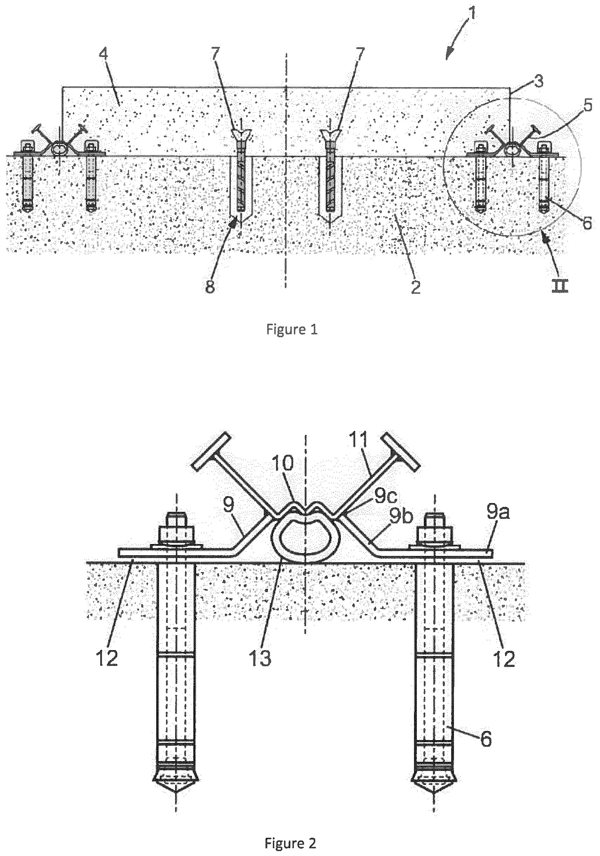

La figure 1 représente un module 1 de renforcement de l'étanchéité à l'air fixé sur un support 2. Le module comprend un cadre métallique 3 entourant une plaque 4 en béton fibré à ultra haute performance (BFUHP). Le cadre métallique présente un profil Oméga 5 dont la structure détaillée est donnée ci-après en lien avec la figure 2. Le profil Oméga 5 est fixé au support 2 à l'aide de chevilles 6 à verrouillage de forme. La plaque 4 de béton est fixée au support 2 dans sa partie centrale par des paires (une seule est représentée sur la figure 1) de goujons 7 scellés par une résine 8 dans le support.

Le profil Oméga 5 permet de solidariser deux modules de renforcement de l'étanchéité 1 entre eux. Il comprend deux parties plates 9a destinées à être en appui sur le support 2 et à supporter la zone périphérique de chacune des plaques de BFUHP qu'il permet de solidariser. Ces deux parties plates 9a se prolongent chacune par une partie oblique 9b. Les extrémités libres 9c des parties obliques 9b sont en vis-à-vis et se rejoignent par une zone 10 en accordéon, formant ainsi la chambre de déformation du profil Oméga. Sur chacune des parties obliques 9b du profil Oméga est soudée perpendiculairement une protubérance 11 en T. Le profil Oméga est fixé au support par des chevilles 6 à verrouillage de forme qui traversent chacune les parties 9a du profil destinées à être en appui sur le support. L'étanchéité entre le support et le cadre métallique est assurée d'une part par un joint plat 12 disposé sous les parties 9a du profil en contact avec le support 2 et d'autre part par un joint torique 13 disposé dans la chambre de déformation du profil Oméga.

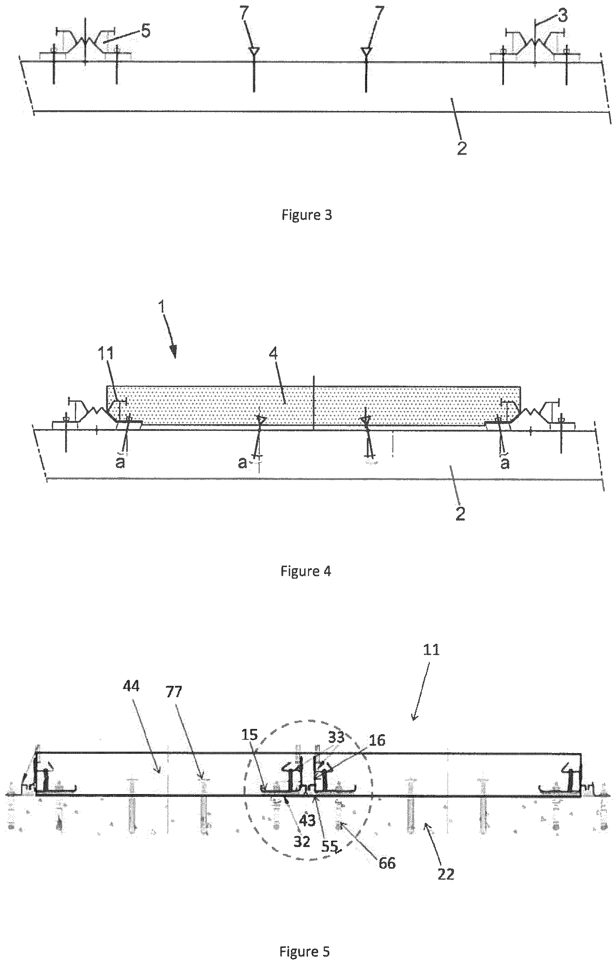

Les figures 3 et 4 illustrent le procédé de mise en place d'un module 1 de renforcement de l'étanchéité à l'air sur un support 2. Dans une première étape, illustrée par la figure 3, le cadre métallique 3 est fixé au support par les profils Oméga 5 et des paires de connecteurs 7 sont fixés au support 2 dans la partie centrale délimitée par le cadre métallique 3. Une fois le support métallique fixé, le béton BFUHP est coulé dans le cadre métallique. La tête des connecteurs 7 et les éléments 10 et 11 du profil Oméga se trouvent noyés dans la masse de BFUHP solidarisant ainsi la plaque de béton BFUHP 4 et le cadre métallique 3.

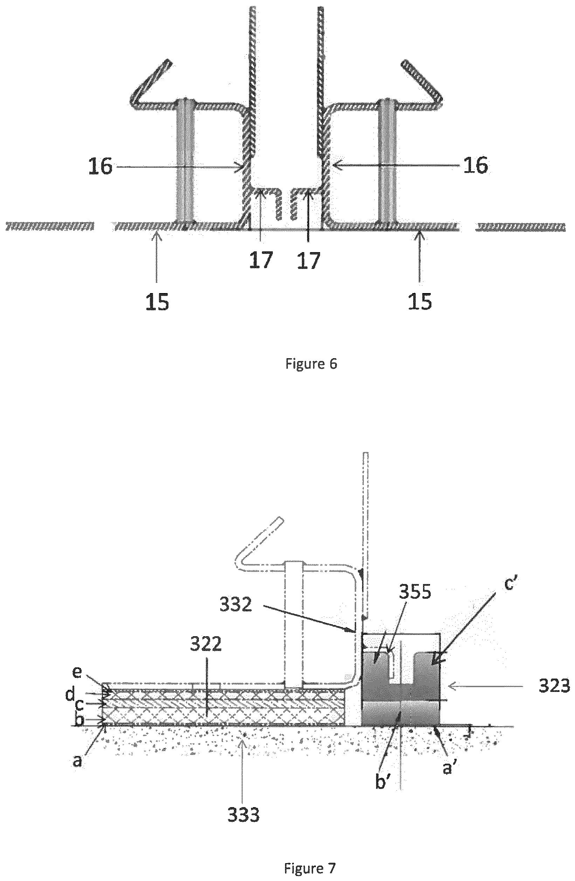

La figure 5 représente un module 11 de renforcement de l'étanchéité à l'air fixé sur un support 22. Le module comprend un cadre métallique 33 entourant une plaque 44 en béton fibré à ultra haute performance (BFUHP). Le cadre métallique 33 présente un profil à crochet à angle droit 55 dont la structure détaillée est donnée ci-après en lien avec la figure 6. Le profil en crochet à angle droit 55 est fixé au support 22 à l'aide de chevilles 66 à verrouillage de forme. La plaque 44 de béton est fixée au support 22 dans sa partie centrale par des paires (une seule est représentée sur la figure 5) de goujons 77 scellés par une résine (non représentée) dans le support 22.

Le profil à crochet à angle droit 55 permet de solidariser deux modules de renforcement de l'étanchéité 11 entre eux. Il comprend une partie plate 15 destinée à être en appui sur le support 22 et à supporter la zone périphérique de chacune des plaques de BFUHP qu'il permet de solidariser. Ces deux parties plates 15 se prolongent chacune par une autre partie plate 16 perpendiculaire à la partie plate 15. Un crochet à angle droit vers le bas 17 est solidaire de la partie plate 16. Le profil crochet à angle droit est fixé au support 22 par des chevilles 66 à verrouillage de forme qui traversent chacune des parties plates 15 du profil destinées à être en appui sur le support. L'étanchéité entre le support et le cadre métallique est assurée d'une part par un joint plat 32 disposé sous les parties 15 du profil en contact avec le support 22 et d'autre part par un joint 43 en forme de U, le crochet du profil d'un cadre et le crochet du profil du cadre adjacent venant chacun s'insérer dans la partie centrale du U.

La figure 7 représente un profil en crochet à angle droit comprenant un complexe de joints incluant un joint plat multicouches 322 situé sous les parties plates du cadre métallique 332 et un joint sous forme de U 323 sous le crochet à angle droit 355 du profil.

Le joint plat 322 est un joint multicouche qui comprend (a) une de type EPDM d'une épaisseur de 1mm disposée sur le support 333/ (b) une couche de 10mm d'une mousse EPK/ (c) une couche de type EPDM d'une épaisseur de 5mm/ (d) une couche de 5mm d'une mousse EPK / (e) une couche de type EPDM d'une épaisseur de 1mm.

Le joint sous forme de U 323 est également un joint multicouche qui comprend une première couche disposée sur le support 333 de 1mm constituée d'un joint EPDM puis une seconde couche de 15mm d'une mousse EPK et enfin une troisième couche de 30mm de type EPDM.

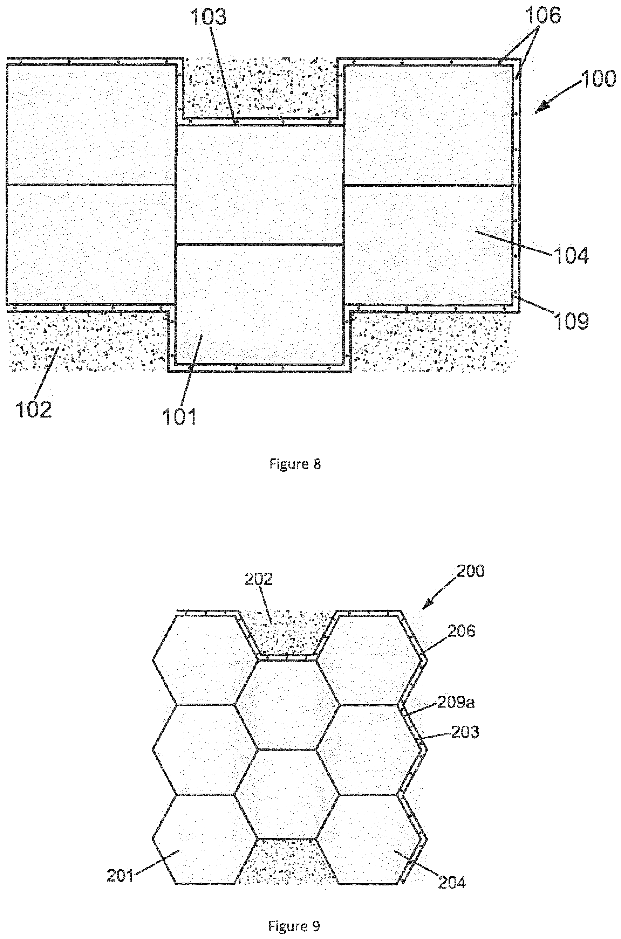

Sur la figure 8 une structure en quinconce 100 est formée de différents modules rectangulaires 101, formant un réseau continu. Chaque module comprend un cadre métallique rectangulaire 103 dans lequel est insérée de manière étanche une plaque de BFUHP 104. Les différents modules sont fixés sur le support 102 par des chevilles 106 traversant les parties plates du profil Oméga ou du profil en crochet à angle droit du cadre métallique.

Sur la figure 9, la structure en nid d'abeille 200 est formée de différents modules hexagonaux 201, formant un réseau continu. Chaque module comprend un cadre métallique hexagonal 203 dans lequel est insérée de manière étanche une plaque de BFUHP 204. Les différents modules sont fixés sur le support 202 par des chevilles 206 traversant les parties plates du profil Oméga ou du profil en crochet à angle droit du cadre métallique.

L'invention est décrite ci-après à l'aide d'exemples non limitatifs donnés à titre d'illustration seulement.

### EXEMPLES

### EXEMPLE 1 : Préparation d'un module de chemisage

Un module de chemisage tel que décrit sur la figure 1 est mis en place sur un support. Sous les parties plates du profil Oméga du cadre métallique sont disposés des joints plats et dans la cavité de déformation du profil Oméga est placé un joint torique en élastomère EPDM (éthylène-propylène diène monomère). Le cadre métallique en acier, rectangulaire 1m*3m, est fixé sur sa périphérie par des chevilles HILTI® à verrouillage de forme. Dans la zone centrale délimitée par le cadre métallique 3 paires de goujons sont fixées au support par scellage avec de la résine étanche à l'air de type RE500 de chez HILTI®. La tête des goujons dépassant de 10 cm.

Un coffrage est disposé sur les faces du cadre métallique, laissant un espace de 15 cm, et le béton BFUHP est coulé dans le coffrage puis séché pendant 24h à température ambiante. Après 2 jours, le coffrage peut être retiré. Le BFUHP ne subit pas de traitement thermique et présente les caractéristiques suivantes :
- Module de traction à 28 jours : de 6 à 10 MPa
- Module de flexion : de 18 à 35 MPa
- Retrait à 28 jours : inférieur à 350 µm/m à 50% HR
- Perméabilité à l'air : au moins de 2. 10⁻¹⁹ m² (selon norme XP P 18-463) à 90 jours.

Après séchage, on observe que le retrait du BFUHP de 300µm/m a conduit à un léger déplacement du cadre métallique vers l'intérieur du module comme illustré sur la figure 4. Les goujons et les chevilles ont subi une légère rotation (d'angle a) vers la périphérie du module. Les contraintes liées au retrait sont totalement absorbées par les chevilles et les goujons, notamment grâce à la résine de scellage.

### EXEMPLE 2 : Test de mise sous pression 4,5 bars

Un module préparé et fixé comme dans l'exemple 1 est soumis à un test règlementaire de montée en pression à 4,5 bars.

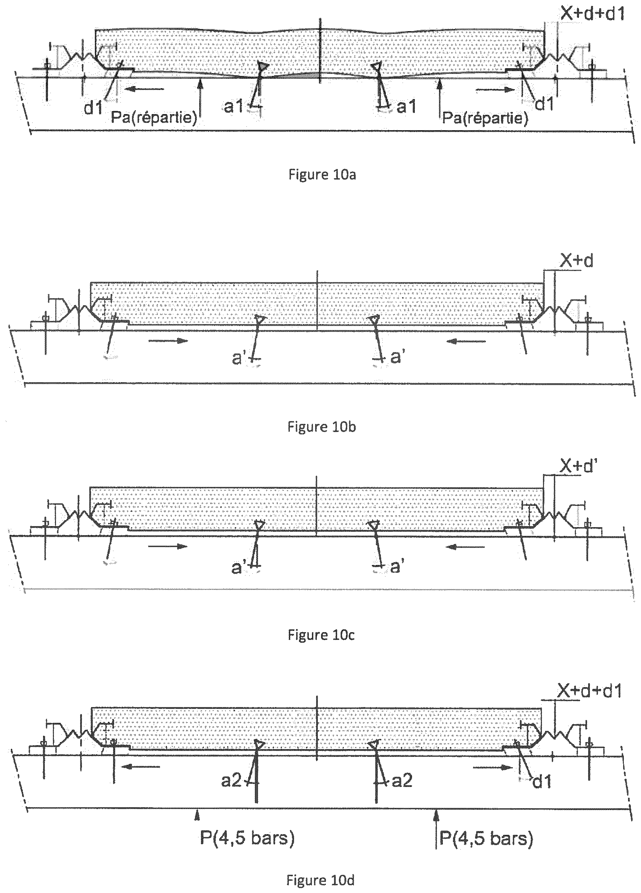

L'évolution du module en l'absence de fuite dans le support est représentée sur les figures 10a à 10c.

Une pression de 4,5 bars est appliquée sous le support sur lequel est placé le module. Sous l'effet de la pression, la plaque de béton se déforme (figure 10a). Elle subit un allongement longitudinal d1 vers la périphérie de l'ordre de 300µm/m et un gonflement de l'ordre de 10µm/m. Pour supporter les contraintes de déformation, le cadre se déplace vers la périphérie d'une distance d1 et les goujons et chevilles subissent une rotation vers la périphérie d'un angle a1.

Lors du retour à la pression atmosphérique (figure 10b), le module retrouve son état initial correspondant à celui de la figure 4. Il peut également prendre un état intermédiaire, tel que représenté sur la figure 10c, avec un déplacement d'légèrement supérieur à d mais inférieur à d+d1 et une rotation d'angle a' légèrement supérieur à l'angle a mais inférieur à a1.

En présence d'une fuite, on n'observe pas de décollement ni de déformation de la plaque de béton la valeur de la pression Pa étant faible, voire nulle (figure 10 d). Un très léger allongement longitudinal d1 est observé qui provoque une légère rotation des goujons d'un angle a2 très légèrement supérieur à a1.

Des résultats similaires ont été obtenus en utilisant un profil en crochet à angle droit vers le bas.

### EXEMPLE 3 : Test de mise sous pression 6,5 bars

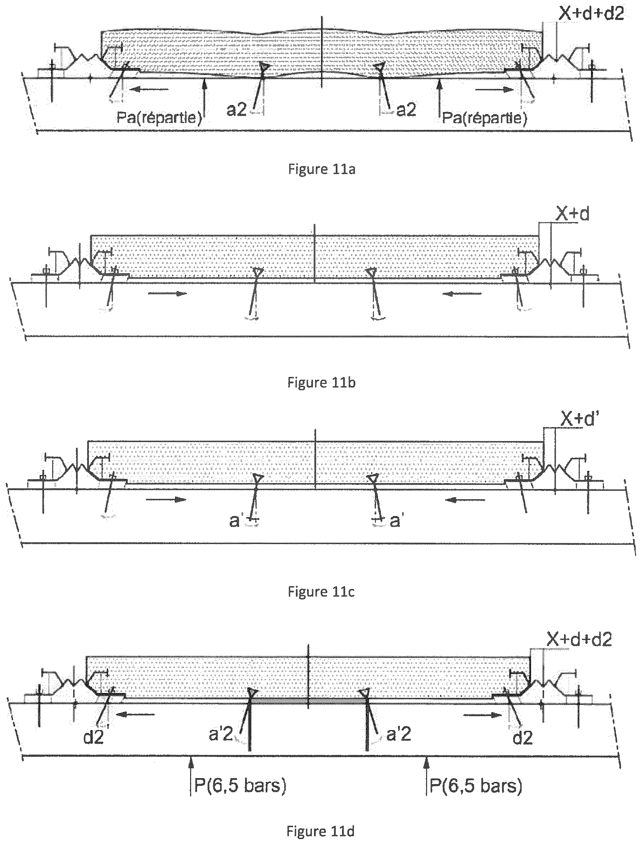

L'exemple 2 est répété en mettant en oeuvre une pression de 6,5 bars. L'évolution du module est représentée sur les figures 11a à 11c en l'absence de fuite et 8d en présence d'une fuite.

Une pression de 6,5 bars est appliquée sous le support sur lequel est placé le module. Sous l'effet de la pression, la plaque de béton se déforme (figure 11a). Elle subit un allongement longitudinal d2 vers la périphérie et un gonflement qui sont légèrement supérieurs à ceux obtenus après mise sous pression de 4,5 bars. Pour supporter les contraintes de déformation, le cadre se déplace vers la périphérie d'une distance d2 et les goujons et chevilles subissent une rotation vers la périphérie d'un angle a2.

Lors du retour à la pression atmosphérique, le module retrouve son état initial correspondant à celui de la figure 4. Il peut également prendre un état intermédiaire, tel que représenté sur la figure 11c, avec un déplacement d'légèrement supérieur à d mais inférieur à d+d2 et une rotation d'angle a' légèrement supérieur à l'angle a mais inférieure à a2.

En présence d'une fuite, on n'observe pas de décollement ni de déformation de la plaque de béton la valeur de la pression Pa étant faible, voire nulle (figure 11d). Un très léger allongement longitudinal d1 est observé qui provoque une légère rotation des goujons d'un angle a'2 très légèrement supérieur à a1.

Des résultats similaires ont été obtenus en utilisant un profil en crochet à angle droit vers le bas.

## Revendications

1. Structure modulaire de renforcement de l'étanchéité à l'air d'un support (2) comprenant un réseau continu de cadres (3) métalliques fixés de façon étanche sur le support, chacun des cadres métalliques insérant une plaque (4) en béton fibré à ultra-haute performance BFUHP.

2. Structure selon la revendication 1, **caractérisée par le fait que** chaque cadre métallique est de forme générale polyédrique, de préférence rectangulaire ou hexagonale.

3. Structure selon la revendication 1 ou la revendication 2, **caractérisée par le fait que** chaque cadre métallique est hexagonal et les cadres sont disposés en un réseau en forme de nid d'abeille.

4. Structure selon la revendication 1 ou la revendication 2, **caractérisée par le fait que** chaque cadre métallique est rectangulaire et les cadres sont disposés en quinconce.

5. Structure selon l'une quelconque des revendications 1 à 4, **caractérisée par le fait que** chaque cadre métallique présente un profil choisi dans le groupe consistant en un profil (5) oméga et un profil en crochet à angle droit vers le bas.

6. Structure selon l'une quelconque des revendications 1 à 5, **caractérisé par le fait que** le BFUHP présente les caractéristiques suivantes :
- Module de traction à 28 jours : de 6 à 10 MPa
- Module de flexion : de 18 à 35 MPa
- Retrait à 28 jours : inférieur à 350 µm/m à 50% HR
- Perméabilité à l'air : au moins de 2. 10⁻¹⁸ m² (selon norme XP P 18-463) à 90 jours.

7. Module (1) de renforcement de l'étanchéité à l'air d'un support comprenant un cadre métallique insérant une plaque de béton fibré à ultra-haute performance BFUHP.

8. Module selon la revendication 7, **caractérisé par le fait qu'**il présente une forme générale polyédrique, de préférence rectangulaire ou hexagonale.

9. Module selon la revendication 7 ou 8, **caractérisé par le fait que** le BFUHP présente les caractéristiques suivantes :
- Module de traction à 28 jours : de 6 à 10 MPa
- Module de flexion : de 18 à 35 MPa
- Retrait à 28 jours : inférieur à 350 µm/m à 50% HR
- Perméabilité à l'air : au moins de 2. 10⁻¹⁸ m² (selon norme XP P 18-463) à 90 jours.

10. Procédé de mise en place d'un module, tel que défini à la revendication 8 ou 9, sur un support comprenant :
- la fixation sur ledit support du cadre métallique ;
- le coulage de la plaque de BFUHP dans le cadre métallique.

11. Procédé selon la revendication 10, dans lequel la fixation comprend :
- la mise en place entre le cadre métallique et le support d'un joint d'étanchéité ;
- la mise en place de chevilles (6) de fixation traversant le cadre métallique, le joint d'étanchéité et une partie (9a) du support ;
- la mise en place dans le support de goujons de fixation dans la partie centrale délimitée par le cadre métallique.

12. Procédé selon la revendication 11, **caractérisé par le fait que** le joint est un joint multicouche, chaque couche étant constituée de caoutchouc alvéolaire de rigidité différente.

13. Procédé selon la revendication 11 ou 12, dans lequel le coulage comprend la mise en place d'un coffrage, le remplissage par le BFUHP frais, le séchage et le décoffrage.

14. Procédé de mise en place d'une structure modulaire telle que définie à l'une quelconque des revendications 1 à 7 comprenant la fixation des cadres métalliques de chaque module pour former un réseau continu et le coulage du BFUHP dans chacun des cadres métalliques.

15. Procédé de démontage de la structure modulaire telle que définie à l'une quelconque des revendications 1 à 7 comprenant la destruction d'au moins une plaque de BFUHP et le retrait des chevilles (6) de fixation et des goujons (7) et le scellage des trous laissés par les chevilles avec une résine (8) de scellage étanche à l'air.

## Patentansprüche

1. Modulare Verstärkungsstruktur zur Verstärkung der Luftdichtheit eines Trägers (2), aufweisend ein kontinuierliches Netzwerk aus Metallrahmen (3), die auf dichte Weise an dem Träger angebracht sind, wobei jeder der Metallrahmen eine Platte (4) aus ultrahochleistungsfähigen Faserbeton BFUHP umgibt.

2. Struktur nach Anspruch 1, **dadurch gekennzeichnet, dass** jeder Metallrahmen eine allgemein polyedrische, vorzugsweise rechteckige oder hexagonale Form hat.

3. Struktur nach Anspruch 1 oder Anspruch 2, **dadurch gekennzeichnet, dass** jeder Metallrahmen hexagonal ist und die Rahmen in einem wabenförmigen Netzwerk angeordnet sind.

4. Struktur nach Anspruch 1 oder Anspruch 2, **dadurch gekennzeichnet, dass** jeder Metallrahmen rechteckig ist und die Rahmen in Quincunxstellung angeordnet sind.

5. Struktur nach einem der Ansprüche 1 bis 4, **dadurch gekennzeichnet, dass** jeder Metallrahmen ein aus der folgenden Gruppe ausgewähltes Profil aufweist: ein Omega-Profil (5) und ein Hakenprofil mit rechtem Winkel nach unten.

6. Struktur nach einem der Ansprüche 1 bis 5, **dadurch gekennzeichnet, dass** der BFUHP die folgenden Eigenschaften aufweist:
- 28-Tage-Zugmodul: von 6 bis 10MPa
- Biegemodul: von 18 bis 35MPa
- 28-Tage-Schrumpfung: weniger als 350µm/m bei 50% relativer Feuchtigkeit
- 90-Tage-Luftdurchlässigkeit: mindestens 2*10⁻¹⁸m² (gemäß NormXP P 18-463).

7. Verstärkungsmodul (1) zur Verstärkung der Luftdichtheit eines Trägers, aufweisend einen Metallrahmen, der eine Platte aus ultrahochleistungsfähigem Faserbeton BFUHP umgibt.

8. Modul nach Anspruch 7, **dadurch gekennzeichnet, dass** es eine allgemein polyedrische, vorzugsweise rechteckige oder hexagonale Form hat.

9. Modul nach Anspruch 7 oder 8, **dadurch gekennzeichnet, dass** der BFUHP die folgenden Eigenschaften aufweist:
- 28-Tage-Zugmodul: von 6 bis 10MPa
- Biegemodul: von 18 bis 35MPa
- 28-Tage-Schrumpfung: weniger als 350µm/m bei 50% relativer Feuchtigkeit
- 90-Tage-Luftdurchlässigkeit: mindestens 2*10⁻¹⁸m² (gemäß NormXP P 18-463).

10. Verfahren zur Montage eines Moduls, wie es in Anspruch 8 oder 9 definiert ist, an einem Träger, aufweisend:
- das Befestigen des Metallrahmens an dem Träger;
- das Gießen der BFUHP-Platte in den Metallrahmen.

11. Verfahren nach Anspruch 10, wobei das Befestigen aufweist:
- das Anordnen eines Dichtungselements zwischen dem Metallrahmen und dem Träger;
- das Einsetzen von Befestigungsdübeln (6), die sich durch den Metallrahmen, das Dichtungselement und einen Teil (9a) des Trägers erstrecken;
- das Einsetzen von Befestigungsbolzen in den Träger in dem von dem Metallrahmen begrenzten zentralen Teil.

12. Verfahren nach Anspruch 11, **dadurch gekennzeichnet, dass** das Dichtungselement ein mehrschichtiges Dichtungselement ist, wobei jede Schicht aus Zellkautschuk unterschiedlicher Steifheit besteht.

13. Verfahren nach Anspruch 11 oder 12, wobei das Gießen das Anordnen einer Schalung, das Füllen mit frischem BFUHP, das Trocknen und das Entfernen der Schalung aufweist.

14. Verfahren zur Montage einer modularen Struktur, wie sie in einem der Ansprüche 1 bis 7 definiert ist, aufweisend das Befestigen von Metallrahmen jedes Moduls, um ein kontinuierliches Netzwerk zu bilden, und das Gießen des BFUHP in jeden der Metallrahmen.

15. Verfahren zur Demontage einer modularen Struktur, wie sie in einem der Ansprüche 1 bis 7 definiert ist, aufweisend das Zerstören mindestens einer BFUHP-Platte und das Herausziehen der Befestigungsdübel (6) und der Bolzen (7) und das Versiegeln der von den Dübeln zurückgelassenen Löcher mit einem luftdichten Versiegelungsharz (8).

## Claims

1. Modular structure for reinforcing the airtightness of a support (2) comprising a continuous network of metal frames (3) secured to the support in a sealed manner, each of the metal frames surrounding a slab (4) of ultra-high performance fibre reinforced concrete UHPFC.

2. Structure as claimed in claim 1, **characterised in that** each metal frame is of a general polyhedral shape, preferably rectangular or hexagonal.

3. Structure as claimed in claim 1 or claim 2, **characterised in that** each metal frame is hexagonal and the frames are disposed in a network of a honeycomb shape.

4. Structure as claimed in claim 1 or claim 2, **characterised in that** each metal frame is rectangular and the frames are disposed in staggered rows.

5. Structure as claimed in any one of claims 1 to 4, **characterised in that** each metal frame has a profile selected from the group consisting of an omega profile (5) and a profile with a downwardly pointing right-angled hook.

6. Structure as claimed in any one of claims 1 to 5, **characterised in that** the UHPFC has the following properties:
- tensile modulus at 28 days: 6 to 10 MPa
- flexural modulus: 18 to 35 MPa
- shrinkage at 28 days: less than 350 µm/m at 50% HR
- permeability to air: at least 2. 10⁻¹⁸ m² (in accordance with standard XP P 18-463) at 90 days.

7. Module (1) for reinforcing the airtightness of a support comprising a metal frame surrounding a slab of ultra-high performance fibre reinforced concrete UHPFC.

8. Module as claimed in claim 7, **characterised in that** it has a general polyhedral shape, preferably rectangular or hexagonal.

9. Module as claimed in claim 7 or 8, **characterised in that** the UHPFC has the following properties:
- tensile modulus at 28 days: 6 to 10 MPa
- flexural modulus: 18 to 35 MPa
- shrinkage at 28 days: less than 350 µm/m at 50% HR
- permeability to air: at least 2. 10⁻¹⁸ m² (in accordance with standard XP P 18-463) at 90 days.

10. Method for fitting a module as claimed in claim 8 or 9 on a support, comprising:
- securing the metal frame on said support;
- casting the slab of UHPFC in the metal frame.

11. Method as claimed in claim 10, wherein the securing process comprises:
- fitting a seal between the metal frame and the support;
- placing fastening anchors (6) through the metal frame, the seal and a part (9a) of the support;
- placing fastening pins in the support in the central part bounded by the metal frame.

12. Method as claimed in claim 11, **characterised in that** the seal is a multi-layered seal, each layer being made from cellular rubber of differing rigidity.

13. Method as claimed in claim 11 or 12, wherein casting comprises setting up a formwork, filling with fresh UHPFC, drying and removing the formwork.

14. Method for fitting a modular structure as claimed in any one of claims 1 to 7, comprising securing metal frames of each module to form a continuous network and pouring the UHPFC into each of the metal frames.

15. Method for dismantling the modular structure as claimed in any one of claims 1 to 7, comprising breaking at least one UHPFC slab and removing the fastening anchors (6) and fastening pins (7) and sealing the holes left by the anchors with an airtight sealing resin (8).
